# NEUE EUROPÄISCHE PATENTSCHRIFT

(11) **EP 0 166 153 B2**
(45) Veröffentlichungstag und Bekanntmachung des Hinweises auf die Entscheidung über den Einspruch: **24.11.1993**
(45) Hinweis auf die Patenterteilung: 27.06.1990
(21) Anmeldenummer: 85105851.1
(22) Anmeldetag: 13.05.1985
(51) Int. Cl.: B05D 3/06, B32B 27/10, B05D 5/00

(54) **Dekorative Platte mit verbesserten Oberflächeneigenschaften**
Decorative panel with improved surface properties
Panneau décoratif à propriétés de surface améliorées

(30) Priorität: 17.05.1984 DE 3418282
(43) Veröffentlichungstag der Anmeldung: 02.01.1986
(73) Patentinhaber: HOECHST AKTIENGESELLSCHAFT, 65926 Frankfurt am Main (DE)
(72) Erfinder: van der Hoeven, Johannes Christianus Willem, NL-6085 CM Horn (NL)

(56) Entgegenhaltungen:
- DE-A- 3 010 060
- DE-B- 2 947 597
- FR-A- 2 414 578
- US-A- 4 169 005
- ABSTRACT BULLETIN OF THE INSTITUTE OF PAPER CHEMISTRY, Band 51, Nr. 2, August 1980, Seite 253, Zusammenfassung 2214(U)., Appleton, Wisc., US; & JP - A - 79 19 019 (NANIWA PLYWOOD CO. LTD.) 12.07.1979
- ABSTRACT BULLETIN OF THE INSTITUTE OF PAPER CHEMISTRY, Band 54, Nr. 3, September 1983, Seite 352, Zusammenfassung 3250(U)., Appleton, Wisc., US; & JP - A - 82 133 067 (DAINIPPON PRINTING CO. LTD.) 17.08.1982

## Beschreibung

Die Erfindung betrifft eine dekorative Platte umfassend eine Kernschicht, ein- oder beidseitige dekorative Schichten sowie eine äußerste Schicht auf wenigstens einer der beiden Plattenoberflächen, welche aus einem Kunstharz aus einer oder mehreren durch Strahlung polymerisierten Komponenten aufgebaut ist, ausgewählt aus der Gruppe der ungesättigten Acrylate und Methylacrylate.

Bekannte Platten dieser Art werden für Innen- oder Außenanwendungen im Bausektor eingesetzt, wobei sie je nach ihrer Dicke als Verkleidungsplatten oder als selbsttragende Elemente verwendet werden.

Solche Platten sind aber kratzempfindlich: die durch Strahlung polymerisierte Oberflächenschicht dieser Platten zeigt eine nach DIN 53 799, Teil 10, gemessene kratzbeanspruchung von 0,7 bis 0,9 Newton.

Aus diesem Grund sind sie für diese Anwendungen weniger geeignet.

Es ist somit Aufgabe der vorliegenden Erfindung eine insbesondere für Außenanwendungen, für den Innenausbau und zur Herstellung von Spezialmöbeln geeignete dekorative Platte anzugeben, deren Oberfläche hohe Oberflächenhärte aufweist.

Dieser Aufgabe wird gelöst durch die im Anspruch 1 angegebene Platte; die abhängigen Ansprüche betreffen besondere Ausführungsformen der Platte. Die Platte ist ein flächenhafter Körper, dessen Oberflächenform und Oberflächenstruktur dem Anwendungszweck angepaßt ist und der z.B. auch gebogene Form aufweisen kann. Unter einer Platte im Sinne der Erfindung sind auch Folien aus Kunststoff, insbesondere PVC und Polystyrol, zu verstehen, die gegebenenfalls eingefärbt und/oder bedruckt sind.

Bei der nach DIN 53 799, Teil 10, durchgeführten Messung der Kratzfestigkeit wird die Kraft bestimmt, mit der eine Diamantnadel einen sichtbaren Kratzer auf der Plattenoberfläche erzeugt. Diese Beurteilung erfolgt unmittelbar nach der Einwirkung der Diamantnadel, da infolge der Elastizität der Oberflächenschicht nach der Kratzbeanspruchung eine allmähliche Rückstellung der Oberflächendeformation erfolgen kann. Die Kratzfestigkeit ist ein Maß die Oberflächenhärte.

Uberraschenderweise wurde gefunden, daß diese dekorative Platte mit der speziellen durch Strahlung polymerisierten Kunstharzschicht auf wenigstens einer der Außenoberflächen gegenüber den bisher bekannten Platte nicht nur eine ausgezeichnete Witterungsbeständigkeit, sondern überraschenderweise eine erhöhte Oberflächenhärte besitzt. Sie ist außerdem wesentlich unempfindlicher gegenüber Säuren und organischen Lösungsmitteln.

Die Kernschicht hat die Trägerfunktion der Platte. Sie besteht beispielsweise aus Holz. Auch Kunststorfplatten, z.B. auf Basis von Polyvinylchlorid oder Polyäthylen, Kunststoffolien oder Metallplatten, z.B. aus Stahl, Aluminium, Kupfer, Messing oder anderen Legierungen sind als Kernschicht geeignet. Die durch Strahlung polymerisierte Kunstharzschicht befindet sich direkt auf der Oberfläche dieser Kernschichten oder ist mittels Leimfolien oder Leimfugen, vorzugsweise aber mit haftvermittelnden Kunstharzen, wie z.B. Phenol-Formaldehyd- oder Resorcin-Formaldehyd-Vorkondensat, mit der Kernschicht verbunden. Leimfugen sind reine Klebstoffschichten, Leimfolien sind Trägerschichten, welche mit Klebstoff beschichtet oder getränkt werden. Haftvermittler sind Substanzen, die ohne selbst Klebstoff zu sein, die Verbindung zweier verschiedenartiger Materialien fordern.

Die Kernschicht kann außerdem aus den bei H.P.L.-Platten üblichen mit hitzehärtbarem Kunstharz, insbesondere Phenol-Formaldehyd-Harz, imprägnierten Bögen aus Papier, insbesondere Natronkraftpapier, bestehen, die in der Hitze verpreßt werden. In Abhängigkeit von der gewünschten Plattendicke sind 1 bis etwa 100 Bögen übereinanderliegend in der Hitze verpreßt.

Die Kernschicht kann auch aus unter Druck verfestigtem Vliesstoff oder Matten aus Mineralfasern, Glasfasern, Kunststoffasern oder einem Fasergemisch, bevorzugt jedoch aus Cellulose bestehen. Cellulosehaltige Fasterschichten sind z.B. wirr abgelegte Holzfasern oder Holzspäne. Der Vliesstoff, bzw. die Matte, aus Holz- und/oder Cellulosefasern wird hergestellt durch Aufbringen eines Kunstharzes auf die Fasern, Trocknung der beharzten Fasern, Formung einer Fasermatte und Vorverdichtung dieser Matte unter Einwirkung von Druck (EP-A-0 081 147).

Auf der (den) äußere(n) Oberfläche(n) dieser faserhaltigen Kernschicht befindet sich gegebenenfalls ein Underlay, welches ein hitzehärtbares Aminoplast- oder Phenoplast-Harz enthält. Diese Schicht besteht z.B. aus einem pigmentierten oder unpigmentierten Vliesstoff oder Papier.

Direkt auf die faserhaltige Kernschicht oder auf diese Underlayschicht folgt in einer bevorzugten Ausführungsform eine durch Strahlung polymerisierte Kunstharzschicht, die dekorativ ist, d.h. durch zugesetzte Pigmente oder Farbstoffe besonderen optischen Effekt oder dekorative Wirkung zeigt. Auf der dekorativen durch Strahlung polymerisierten Kunstharzschicht kann noch eine klare, d.h. transparente und pigmentfreie, durch Strahlung polymerisierte Kunstharzschicht vorhanden sein, welche die äußerste(n) Oberfläche(n) der Platte bildet (bilden): doch ist es durchaus möglich, diese klare Kunstharzschicht wegzulassen, so daß dann die dekorative(n) Kunstharzschicht(en) die äußerste(n) Schicht(en) bildet (bilden).

Anstelle der dekorativen Kunstharzschicht kann auch eine Dekorschicht auf Basis einer eingefärbten und/oder bedruckten Kunststoffolie oder auf Basis von Papier verwendet werden, die gewöhnlich aus einem pigmentierten, eingefärbten und/ oder bedruckten Dekorpapier besteht. Auf der Kunststoffolie bzw. dem Dekorpapier befindet sich die durch Strahlung polymerisierte, in diesem Fall transparente Kunstharzschicht. Das Dekorpapier enthält für diesen Zweck übliches hitzehärbares Kunstharz, insbesondere Aminoplast-Harz, und befindet sich auf Kernschichten, die aus dem bei H.P.L.-Platten typischen Natronkraftpapier bzw. aus phenolbeharzten wirr abgelegten Holz- oder Cellulosefasern aufgebaut sind.

Die für die Herstellung der obersten durch Strahlung polymerisierten Kunstharzschicht vorgesehenen Verbindungen umfassen durch aktinische Strahlung radikalisch polymerisierbare Acrylsäureester oder Methacrylsäureester, die einzeln oder zusammen in einem polymerisierbaren Gemisch vorliegen. Die bevorzugte Komponente ist ein polyfunktionelles, d.h. mehrfach ungesättigtes, Präpolymeres. Im copolymerisierbaren Gemisch ist neben dieser überwiegenden Komponente gegebenenfalls eine weitere Komponente mit verdünnender Wirkung vorhanden, welche als Verdünnungsmonomer bzw. Verdünnungsoligomer bezeichnet wird. Im Gemisch hat das polyfunktionelle Präpolymere einen Anteil von 50 bis 100, insbesondere 60 bis 90 Gew.-% vom Gesamtgewicht der copolymerisierbaren Komponenten, Präpolymere mit niedriger Viskosität (kleiner als 100 Poise bei 20°C) werden ohne die eine Verdünnung bewirkenden Monomeren bzw. Oligomeren eingesetzt.

Die verwendeten Komponenten haben eine starke Neigung bei Einwirkung von aktinischer Strahlung radikalisch zu polymerisieren. Als aktinische Strahlung kommt nahes UV-Licht oder energiereiche Strahlung, z.B. Elektronen-Korpuskular- oder Röntgenstrahlung in Betracht. Das radikalisch polymerisierbare Präpolymere ist ein polyfunktionelles ungesättigtes aliphatisches oder aromatisches Acrylat oder Methacrylat, vorzugsweise ein ungesättigtes Polyesteracrylat-Oligomeres, insbesondere aber ein aliphatisches Urethanacrylat-Oligomeres. Aromatische Urethanacrylat-Oligomere führen zwar ebenfalls zu kratzfesten Oberflächenschichten, vergilben aber nach einiger Zeit bei Außenanwendungen.

Im radikalisch copolymerisierbaren Gemisch wird neben dem Präpolymeren als zusätzliches geeignetes Monomeres bzw. Oligomeres ein Mono-, Di-, Tri-, Tetra-, Penta- oder Hexaacrylat bzw. -methacrylat. vorzugsweise aber ein Di- oder Triacrylat, verwendet. Diese Mono- bis Hexaacrylate bzw. -methacrylate sind Ester von Polyolen mit 1 bis 6 OH-Gruppen mit Acrylsäure bzw. Methacrylsäure und werden deshalb auch als Polyolacrylate bzw. Polyolmethacrylate bezeichnet. Geeignete Diacrylate sind Ester der Acrylsäure mit aliphatischen, zweiwertigen Alkoholen, insbesondere Äthylenglykol, 1,2-Propylenglykol, 1,3-Propylenglykol, Butandiolen, 1,6-Hexandiol oder Neopentylglykol, mit aliphatischen Ather-alkoholen, insbesondere Diäthylenglykol, Dipropylenglykol, Dibutylenglykol, Polyäthylenglykole oder Polypropylenglykole, mit oxyalkylierten Verbindungen der zuvorgenannten aliphatischen Alkohole und Äther-alkohole oder auch mit aromatischen Dihydroxylverbindungen, insbesondere Bisphenol A, Brenzcatechin, Resorzin, Hydrochinon, p-Xylylenglykol oder p-Hydroxybenzylalkohol. Bevorzugte Diacrylate sind 1,6-Hexandioldiacrylat, Tripropylenglykoldiacrylat und 1,4-Butandioldiacrylat. Bevorzugte Triacrylate sind Trimethylolpropantriacrylat und Pentaerythrit-triacrylat.

Geeignete polyfunktionnelle Präpolymere sind außere den bereits genannten Urethanacrylat- und ungesättigten Polyesteracrylat-Oligomeren auch Epoxyacrylat- und Silikonacrylat-Oligomere, welche im radikalisch copolymerisierbaren Gemisch vorzugsweise mit den genannten Diacrylaten oder Triacrylaten verwendet werden.

Die Präpolymeren sind an sich bekannte Verbindungen und werden beispielsweise hergestellt aus hydroxylierten Copolymeren, bei denen die Hydroxylgruppen statistisch entlang der Copolymerkette verteilt sind. Aus diesem Copolymer erhält man durch Verersterung der Hydoxylgruppen mit Acrylsäure statistisch ungesättige AcrylCopolymere. Zur Herstellung halbendständiger ungesättigter Acryl-Copolymere wird bei der Hsrstellung des hydroxylierten Copolymeren die Hydroxylgruppe am Ende der Kette angebracht. Urethanacrylat-Oligomere werden hergestellt durch Umsetzen von Hydroxygruppen enthaltenden (Meth)acrylsäureestern, z.B. von Hydroxyethylmethacrylat, mit mehrwertigen Isocyanaten, bevorzugt Diisocyanaten, Die Di- bzw. Polyisocyanate können bevorzugt Umsetzungsprodukte von Diolen, Polyätherdiolen oder Polyesterdiolen mit einem stöchiometrischen Überschuß an monomeren Di- oder Polyisocyanate sein.

Überwiegt im polymerisierbaren Gemisch das polyfunktionelle Präpolymere, so bestimmt es als Basisharz durch seine chemische Natur die Eigenschaften der gehärteten Öberflächenschicht. Das zugesetzte Mono- biz Hexaacrylat bzw. -methacrylat gestattet als Verdünnungsmonomer bzw. -oligomer die Einstellung der Viskosität des zu härtenden Gemisches, die normalerweise in einem Viskositätsbereich von 20 bis 100 Poise (20°C) liegt, und nimmt vollständig an der radikalischen Polymerisation teil. Bei der Bestrahlung ergibt sich die Aushärtung der Beschichtung durch radikalische Polymerisation zwischen den Doppelbindungen des Präpolymeren und des gegebenenfalls vorhandenen Verdünnungsmonomeren bzw. -oligomeren.

Beim Aushärten unter einwirkung von aktinischer Strahlung müssen Photoinitiatoren zugeführt werden, welche UV-Licht absorbieren und unter Bildung von Radikalen die Einleitung der radikalischen Polymerisation erleichtern. Beim Aushärten mit Elektronenstrahlen benötigt man dagegen keine Photoinitiatoren. Die meisten Photoinitiatoren enthalten wenigstens eine Carbonylgruppe, die in Konjugation zu einem aromatischen Ring steht. Gewöhnlich wird ein Photoinitiatorsystem verwendet, das aus mehreren Komponenten besteht.

Daneben enthält das durch Strahlung polymerisierte Kunstharz gegebenenfalls die zur Erzielung der gewünschten dekorativen, mechanischen und physikalischen Oberflächenschaften üblichen Additive wie Weichmacher, Füllstoffe, Pigmente, sowie Stabilisatoren. Zu diesen Stoffen gehört beispielsweise Bariumsulfat, Kieselsäure, Aluminiumoxid und lichtstabile Pigmente.

Zur Herstellung der dekorativen Schichtstoffplatte werden die flüssigen durch Strahlung polymerisierbaren Verbindungen auf die zu beschichtende Unterlage aufgebracht, z.B. durch Sprühen, Gießen, ein Rakelsystem, eine Walze oder Siebdruck. Die aufgetragene Schicht ist dann, wenn sie auf eine Dekorschicht aufgebracht ist, transparent. Sie kann aber auch selbst dekorativ sein und ist dann eingefärbt und/oder pigmentiert und befindet sich auch einer nicht dekorativen Papierschicht oder direkt auf der Kernschicht. In einer weiteren Ausführungsform wird auf diese dekorative, durch Strahlen gehärtete Kunstharzschicht noch eine zusätzliche, durch Strahlung polymerisierbare Schicht aufgebracht, die allerdings nicht dekorativ sondern transparent ist.

Die für den Auftrag der durch Strahlung polymerisierbaren Verbindungen verwendete Unterlage ist somit eine Papierschicht, eine dekorative Papierschicht oder die obengenannten Kernschichten aus Holz, Kunststoff, Metall oder einem Stapel aus weiteren faserhaltigen Schichten, welcher den Kern der später erhaltenen Schichtstoffplatte bildet. Die fasterhaltigen Schichten des Stapels, die vorzugsweise aus Natronkraftpapieren oder einem Vliesstoff aus Holz- und/oder Cellulosefasern bestehen, enthalten die bei H.P.L.-Platten üblichen hitzehärtbaren vorgehärteten Harze, insbesondere Phenol-Formaldehyd-Harze, während die gegebenenfalls zusätzlich vorhandenen auf dem Stapel liegenden Papiere ein Aminoplast-Harz, insbesondere aber ein Phenoplast-Harz enthalten. Der Gehalt an hitzehärtbaren Harzen beträgt 20 bis 250 Gew.-%, bezogen auf die jeweilige Schicht.

Das Tränken bzw. Imprägnieren der fasterhaltigen Schichten bzw. der Papierschichten erfolgt beispielsweise durch Eintauchen in ein Bad mit einer das hitzehärtbare Harz enthaltenden Lösung oder Dispersion bzw. durch Auftragen oder Aufsprühen mittels eines Dosiersystems. Das Lösungs- bzw. Dispergiermittel ist je nach verwendetem Kunstharz wäßrig-alkoholisch, wäßrigacetonisch oder wäßrig. Ferner kann es bis zu 20 Gew.-% Flammschutzmittel enthalten. Anschließend wird die Verteilung der gewünschten Harzmenge durch Abstreifen oder Abquetschen, z.b. mit Walzen, vorgenommen.

Noch vor dem Auftrag der durch Strahlung polymerisierbaren Verbindungen auf die vorgesehene Unterlage werden die hitzehärtbaren Harze der Unterlage wie üblich vorgehärtet und getrocknet.

Zur Einleitung der durch Strahlen bewirkten Polymerisation kann eine übliche Quelle zur Bildung freier Radikale eingesetzt werden, wie z.B. ein Photoinitiator, oder es wird einfach nur Hitze zugeführt. Wenn die photopolymerisierbare Schicht Photoinitiatoren enthält, wird die Polymerisation beim Durchgang unter Quecksilberdampflampen eingeleitet. Für das Aushärten mittels UV-Strahlung ist die Abwesenheit von Sauerstoff nicht erforderlich. Die zum Aushärten der polymerisierbaren Verbindungen verwendeten Elektronenstrahlen haben zweckmäßigerweise eine Energie entsprechend 150 bis 350 KeV. Die Energie der Elektronenbeschleuniger wird durch die Dicke der auszubildenden Kunstharzschicht, die notwendige Strahlungsdosis und die Einwirkungsdauer bzw. Durchführgeschwindigkeit bestimmt.

Die für die Beschleunigung der Elektronenstrahlen verwendeten Vorrichtungen sind im Handel erhältlich. Es handelt sich um die als "Scanner type" und "Linearcathode type" bekannten Beschleuniger. Durch die Wechselwirkung mit den Komponenten der polymerisierbaren Schicht werden freie Radikale gebildet. Diese Aushärtungsvorgang wird gewöhnlich bei Raumtemperatur durchgeführt. Das Aushärten mittels Elektronenstrahlen findet vorzugsweise in einer inerten, d.h. weitgehend sauerstoffreien Atmosphäre statt.

Nach der durch Strahlung bewirkten Polymerisation werden die Unterlagen, sofern sie ausreichend flexibel sind, zur Lagerung aufgewickelt oder gleich auf das gewünschte Format zugeschnitten. Wenn die das durch Strahlung polymerisierte Harz aufweisende Unterlage nur aus einer Papierschicht besteht, wird sie auf einem die Kernschicht bildenden Stapel aus faserhaltigen Schichten aufgelegt. Es ist auch möglich, zusätzlich die untere Seite des Stapels mit einer solchen Unterlage zu versehen.

Das erhaltene Schichtpaket aus faserhaltiger Kernschicht und durch Strahlung polymerisierter Oberflächenschicht(en) sowie gegebenenfalls dazwischen liegenden Schichten aus Papier oder Dekorpapier wird, wie bei der Herstellung von H.P.L.-Platten üblich, zu einer dekorativen Platte in der Hitze verpreßt, wobei die hitzärtbaren Harze ausgehärtet werden. Die Temperatur liegt vorzugsweise bei 120 bis 220°C, der Druck vorzugsweise im Bereich von 15 bis 100 bar und die Einwirkungszeit gewöhnlich bei 1 bis 30 Minuten.

Das Verpressen erfolgt in einer bekannten Stationär-, Durchlauf- oder kontinuierlichen Preßvorrichtung. Die Zahl und die Dicke der fasterhaltigen Schichten der Kernschicht bzw. die Dicke der Kernschicht wird je nach Verwendung der Platte gewählt, wobei für Außenanwendungen je nach Verwendungszweck Plattendicken von 3 bis 10 mm erforderlich sind. Wird eine Vielzahl von Platten, die durch Strahlung polymerisierte Kunstharzschichten aufweisen, in der Presse übereinandergestapelt, was bei geringer Dicke der Kernschicht wirtschaftlich von Vorteil ist, so werden die einzelnen Platten durch jeweils ein Trennmedium voneinander getrennt. Das Trennmedium ist z.B. eine Papierschicht, Kunststoffolie oder Metallplatte, welche der angrenzenden äußeren Schicht der jeweiligen Platte eine Struktur verleihen kann.

Die hergestellten dekorativen Platten sind überraschenderweise besonders witterungsbeständig und kraftfest, was eventuell auf einer nicht vorhersehbaren Wechselwirkung zwischen den verschiedenen Harzen oder vielleicht auch auf einer Nachvernetzung der radikalisch polymerisierbaren Verbindungen bei der Hitzeverpressung beruhen könnte. Die Kratzfestigkeit und chemische Beständigkeit ist überraschenderweise wesentlich höher als wenn eine Platte einen Anstrich aus den gleichen durch Strahlung polymerisierbaren Verbindungen erhalten hätte und der Anstrich-ohne die Hitzeverpressung-nur durch Strahlung radikalisch polymerisiert worden wäre.

Die Erfindung wird durch die nachfolgenden Beispiele näher erläutert. Die Prozentangaben sind Gewichtsprozent.

### Beispiel 1

Ein pigmentiertes (Pigmentanteil 15%) oder bedrucktes Dekorpapier wird einseitig mit hitzehärbarem Melaminharz (Harzauftrag 80%) imprägniert und das Harz teilweise ausgehärtet. Auf die gegenüberliegende Seite des Dekorpapiers wird anschließend mit Walzen eine transparente Flüssigkeit (Viskosität 60 Poise bei 20°C) aus einem durch Strahlung polymerisierbaren 6:4-Gemisch aus aliphatischen Urethanacrylat-Oligomeren als Präpolymeres und Trimethylolpropantriacrylat als Verdünnungsmonomer aufgebracht, wobei sich ein geschlossener Film (Schichtdicke etwa 50 µm) ausbildet. Danach wird der Film aus durch Strahlung polymerisierbaren Verbindingen in inerter Atmosphäre (Sauerstoffgehalt kleiner als 100 ppm) ohne Druckanwendung und bei Raumtemperatur mit Elektronenstrahlen weitgehend homogen vernetzt. Die absorbierte Strahlungsdosis beträgt 60 kGy. Jeweils ein Dekorpapier wird mit der außen liegenden polymerisierten Kunstharzschicht auf die beiden Oberflächen eines Stapels aus 12 übereinanderliegenden Papieren gelegt. Diese Papier wurden zuvor mit hitzehärtbarem Phenol-Formaldehyd-Harz getränkt und das Harz teilweise ausgehärtet. Das Schichtpaket wird in einer bei der H.P.L.-Platten-Herstellung üblichen Presse zwischen zwei Strukturgebern bei 150°C und 80 bar 10 Minuten lang verpreßt. Esshat folgenden Aufbau:
- Klarschicht (durch Strahlung polymerisiertes Kunstharz),
- Pigmentiertes oder bedrucktes Dekorpapier (mit Melaminharz) als dekorative Schicht,
- 12 Papierbahnen (mit Phenol-Formaldehyd-Harz) als Kernschicht,
- Pigmentiertes oder bedrucktes Dekorpapier (mit Melaminharz) als dekorative Schicht,
- Klarschicht (durch Strahlung polymerisiertes Kunstharz).

Die nach dem Abkühlen aus der Presse entnommene beidseitig dekorative Platte ist 3 mm dick, hat eine vom Strukturgeber in der Presse erzeugte matte, orangenstrukturähnliche Oberflächenbeschaffenheit und in Abhängigkeit vom gewählten Dekorpapier eine Kratzfestigkeit von 3 bis 4 N (DIN 53799, Teil 10). Die Auswertung der Kratzfestigkeit findet unmittelbar nach der Kratzbeanspruchung statt. Ihre Oberfläche zeigt nach sechsstüngider Einwirkung von einigen Tropfen von konzentrierter Mineralsäure, wie z.B. Schwefelsäure, und Abspülen der Säure mit Wasser keine Veränderung (DIN 53230). Die Lichtechtheit dieser Platte erhält die Note 8 (DIN 54 004). Die Beständigkeit der Platte gegen Witterungseinflüsse wird gemessen nach ASTM G 53-84, wobei man über 1500 h einen Zeitzyklus von 4 h UV/4 h CON (condensation period) bei einer Testtemperatur von 50°C einhält. Nach der Bewitterung zeigt die Platte keine Ausblühungen der Füllstoffe, keinen Glanzverlust und keine Verfärbung.

### Beispiel 2

Die durch Strahlung polymerisierbare Flüssigkeit ist eine homogene pastöse Masse (Viskosität 60 Poise bei 20°C). Sie enthält als polymerisierbar Komponenten:
- 62 Gewichtsteile aliphatisches Urethanacrylat-Oligomeres als Präpolymeres und
- 27 Gewichtsteile Trimethylolpropantriacylat als Verdünnungsmonomer.

Zusätzlichen enthält die Flüssigkeit:
- 10 Gewichtsteile weißes Pigment (TiO₂) und
- 1 Gewichtsteil Kieselsäure (Aerosil® 200).

Die verschiedenen Komponenten dieses Gemisches werden beispielsweise mit einer Kugelmühle zu der homogenen pastösen Masse verarbeitet und in dieser Form auf ein Natronkraftpapier in einer Schicht von etwa 80 µm aufgestrichen. Das Natronkraftpapier war zuvor mit hitzehärbarem Phenol-Formaldehyd-Harz (Harzauftrag 70%) imprägniert worden und dieses Harz dann teilweise ausgehärtet.

Danach werden die durch Strahlung polymerisierbaren Verbindungen ohne Druckanwendung und bei Raumtemperatur mit Elektronenstrahlen analog Beispiel 1 copolymerisiert. Das Papier wird mit der außen liegenden durch Strahlung polymerisierten Kunstharzschicht jeweils auf die Außenseite eines Stapels aus 50 übereinanderliegenden Papieren gelegt. Die Papiere wurden zuvor mit nitzehärtbarem Phenol-Formaldehyd-Harz getränkt und das Harz teilweise ausgehärtet. Das Schichtpaket wird in einer Presse bei 150°C und 80 bar 20 Minuten lang verpreßt. Es hat folgenden Aufbau:
- Dekorative Schicht (durch Strahlung polymerisiertes Kunstharz mit Pigmenten) als äußere Schicht auf einer vorimprägnierten Papierschicht,
- 50 Papierbahnen (mit Phenol-Formaldehyd-Harz getränkt) als Kernschicht,
- Dekorative Schicht (durch Strahlung polymerisiertes Kunstharz mit Pigmenten) als äußere Schicht auf einer vorimprägnierten Papierschicht.

Die erhaltene 10 mm dicke beidseitig dekorative Platte hat eine Kratzfestigkeit von größer als 3,0 N (DIN 53799, Teil 10). Sie ist hydrolyseunempfindlich und zeigt keine Änderungen nach 100-stündigem Kochem in Wasser. Ihre Oberfläche wird durch konzentrierte Mineralsäure während einer Einwirkungszeit von 6 Stunden nicht angegriffen (DIN 53230). Die Lichtechtheit dieser Platte erhält die Note 8 (DIN 54004). Ihre Beständigkeit gegen Witterungseinflüsse wird wie in Beispiel 1 gemessen. Nach der Bewitterung zeigt die Platte keine Ausblühungen der Füllstoffe, keinen Glanzverlust und keine Verfärbung.

### Beispiel 3

Die viskose durch Strahlung polymerisierbare Flüssigkeit des Beispiels 2 wird beidseitig auf eine Spanplatte (Dicke 16 mm, Rohdichte 700 kg/m³) in einer Schichtdicke von etwa 100 µm aufgetragen und-wie im Beispiel 1 beschrieben-mit Elektronenstrahlen weitgehend homogen vernetzt. Die Platte, auf deren beiden Oberflächen sich die durch Strahlung polymerisierte Kunstharzschicht befindet, wird in einer Presse bei 150°C und 15 bar 90 Sekunden lang verpreßt. Die erhaltene dekorative Platte zeigt eine Kratzfestigkeit von größer als 2,0 N (DIN 53799, Teil 10). Ihre Oberfläche wird durch konzentrierte Mineralsäure während einer Einwirkungszeit von 6 Stunden nicht angegriffen. Die Lichtechtheit dieser Platte erhält die Note 8 (DIN 54004).

### Beispiel 4

Die durch Strahlung polymerisierbare Flüssigkeit enthält:
- 69 Gewichtsteile Polyesteracrylat-Oligomeres als Prärpolymeres,
- 25 Gewichtsteile Trimethylolpropantriacrylat als Verdünnungsmonomer sowie
- Gewichtsteile Pigment (organischer Farbstoff).

Die verschiedenen Komponenten dieses Gemisches werden beispielsweise mit einer Kugelmühle zu einer homogenen viskosen Flüssigkeit verarbeitet (Viskosität 75 Poise bei 20°C) und in dieser Form auf ein hitzehärtbares, vorgehärtetes Phenol-Formaldehyd-Harz enthaltendes Natronkraftpapier (Harzauftrag 70%, bezogen auf das Papier) in einer Schichtdicke von etwa 80 µm aufgebracht. Anschliessend werden die durch Strahlung polymerisierbaren Verbindungen analog Beispiel 1 ohne Druckanwendung bei Raumtemperatur mit Elektronenstrahlen homogen vernetzt. Die absorbierte Strahlungsdosis beträgt 5 bis 10 kGy. Auf diese durch Strahlung polymerisierte Kunstharzschicht wird mit Walzen eine weitere Schicht aus transparenter, d.h. pigmentfreier durch Strahlung polymerisierbarer Flüssigkeit aufgebracht, welche die gleichen polymerisierbouen Verbindungen enthält wie die zuerst aufgebrachte Schicht, der jedoch zusätzlich 1% UV-Absorber (z.B. ®Givsorb UV-2 der Firma Givaudan S.A.) beigefügt ist. Diese Schicht bildet einen geschlossenen Film mit einer Schichtdicke von etwa 20 µm. Sie wird in inerter Atmosphäre (Sauerstoffgehalt kleiner als 100 ppm) ohne Druckanwendung bei Raumtemperatur mit Elektronenstrahlen polymerisiert. Die absorbierte Strahlungsdosis beträgt 60 kGy. Das Natronkraftpapier wird mit der außen liegenden durch Strahlung polymerisierten pigmentfreien Kunstharzschicht jeweils auf die beiden Oberflächen einer vorgepreßten und vorgehärteten bahnförmigen Fasermatte (Dicke 26 mm) aufgelegt, die aus wirr abgelegten, mit Phenol-Formaldehyd-Harz getränkten Holzfasern besteht. Das Schichtpaket wird in einer Presse bti 150°C und 80 bar 20 Minuten lang verpreßt. Es hat folgenden Aufbau:
- Klarschicht (durch Strahlung polymerisiertes Kunstharz) als äußerste Schicht,
- pigmentiertes durch Strahlung polymerisiertes Kunstharz als dekorative Schicht auf einer vorimprägnierten Papierschicht,
- Holzfasermatte (mit Phenol-Formaldehyd-Harz) als Kernschicht,
- pigmentiertes durch Strahlung polymerisiertes Kunstharz als dekorative Schicht auf einer vorimprägnierten Papierschicht,
- Klarschicht (durch Strahlung polymerisiertes Kunstharz) als äußere Schicht.

Die erhaltene 13 mm dicke beidseitig dekorative Platte besitzt die gleichen Eigenschaften wie die im Beispiel 2 beschriebene.

### Beispiel 5

Eine erste durch Strahlung polymerisierbare Flüssigkeit enthält:
- 65 Gewichtsteile aliphatische Urethanacrylat-Oligomeres als Präpolymeres,
- 28 Gewichtsteile Hexandioldiacrylat als Verdünnungsmonomer,
- 7 Gewichtsteile Pigment (organischer Farbstoff).

Die verschiedenen Komponenten dieses Gemisches werden beispielsweise mit einer Kugelmühle zu einer homogenen viskosen Flüssigkeit verarbeitet (Viskosität 75 Poise bei 20°C) und in dieser Form mit einer Rakelwalze auf ein hitzehärtbares, vorgehärtetes Phenol-Formaldehyd-Harz enthaltendes Natronkraftpapier (Harzauftrag 70% bezogen auf das Papier) in einer Schichtdicke von 80 µm aufgebracht. Unmittelbar anschließend und im gleichen Arbeitsgang wird auf diese Überzugsschicht mit Rakelwalze eine zweite durch Strahlung polymerisierbare Flüssigkeit in einer Schichtdicke von 20 µm aufgebracht. Diese ist im Gegensatz zur ersten transparent und pigmentfrei und ist eine Mischung aus:
- 70 Gewichtsteilen aliphatisches Urethanacrylat-Oligomeren als Präpolymeres,
- 30 Gewichtsteilen Hexandioldiacrylat als Verdünnungsmonomer.

Die beiden Kunstharzschichten (Gesamtdicke 100 µm) werden in inerter Atmosphäre (Sauerstoffgehalt kleiner als 100 ppm) ohne Druckanwendung bei 20°C mit Elektronenstrahlen (Strahlungsdosis 60 kGy) polymerisiert. Jeweils ein Natronkraftpapier wird mit den außen liegenden durch Strahlung polymerisierten Kunstharzschichten auf die Oberflächen einer Kernschicht aufgebracht. Die Kernschicht besteht aus einem Stapel von 50 übereinanderliegenden Papieren, die zuvor mit hitzehärtbarem Phenol-Formaldehyd-Harz getränkt und teilweise ausgehärtet wurden. Das Schichtpaket hat folgenden Aufbau:
- Klarschicht (durch Strahlung polymerisiertes Kunstharz) als äußerste transparente Schicht,
- pigmentiertes durch Strahlung polymerisiertes Kunstharz als dekorative Schicht auf einer vorimprägnierten Papierschicht,
- 50 Papierbahnen (mit Phenol-Formaldehyd-Harz) als Kernschicht,
- pigmentiertes durch Strahlung polymerisiertes Kunstharz als dekorative Schicht auf einer vorimprägnierten Papierschicht,
- Klarschicht (durch Strahlung polymerisiertes Kunstharz) als äußerste transparente Schicht.

Das Schichtpaket wird in einer Presse bei 150°C und 80 bar 20 Minuten lang verpreßt.

Die erhaltene 10 mm dicke beidseitig dekoratives Platte hat die gleichen Eigenschaften wie die im Beispiel 2 beschriebene.

### Beispiel 6

Sieben aufeinanderliegende Bahnen aus teilweise ausgehärtetes Phenol-Formaldehyd-Harz enthaltendem Natronkraftpapier werden einer kontinuierlich arbeitenden Preßvorrichtung zugeführt. Eine der beiden äußeren Bahnen zeigt auf ihrer Außenseite die im Beispiel 5 beschriebene 80 µm dicke durch Strahlung polymerisierte pigmentierte Kunstharzschicht (ohne die transparente äußere Schicht). Die Vorschubgeschwindigkeit der Bahnen beträgt 0,5 m/min. Die Verpressung erfolgt bei 100°C und 50 bar über eine Zeitdauer von etwa 6 Min.

Das Schichtpaket hat beim Durchlaufen der Presse folgenden Aufbau:
- Dekorative Schicht (durch Strahlung polymerisiertes Kunstharz mit Pigmenten) als äußere Schicht auf einer vorimprägnierten Papierbahn,
- fünf Papierbahn (mit Phenol-Formaldehyd-Harz) als Kernschicht.

Die erhaltene 1,3 mm diche einseitig dekorative Platte besitzt die gleichen Eigenschaften wie die im Beispiel 2 beschriebene.

Die in den Beispielen durch Strahlung polymerisierten Kunstharzschichten zeigen vor der Hitzeverpressung noch relativ niedrige Kratzfestigkeitswerte im Bereich von etwa 0,7 bis 0,9 Newton. Erst nachdem erfindungsgemäß die durch Strahlung polymerisierte Kunstharzschicht der Hitzeverpressung unterworfen worden ist, wird überraschenderweise eine wesentlich höhere Oberflächenhärte der Platte erhalten.

## Patentansprüche

1. Dekorative Platte umfassend eine Kernschicht, ein- oder beidseitig dekorative Schichten sowie eine äußerste Schicht auf wenigstens einer der beiden Plattenoberflächen, welche aus einem Kunstharz aus einer oder mehreren durch Strahlung polymerisierten Komponenten aufgebaut ist, ausgewählt aus der Gruppe der ungesättigten Acrylate und Methacrylate, dadurch gekennzeichnet, daß die äußerste, durch Strahlung polymerisierte Schicht unter einem Druck von mindestens 15 bar bei einer Mindesttemperatur von 80 °C verpreßt worden ist, wobei diese äußerste Schicht bei einer Kratzbeanspruchung von mindestens 2, vorzugsweise 2 bis 7 Newton (DIN 53799, Teil 10) kratzfest ist und wobei diese äußerste, durch Strahlung polymerisierte Schicht gegebenenfalls noch übliche Additive enthält.

2. Dekorative Platte nach Anspruch 1, dadurch gekennzeichnet, daß das Kunstharz aus einem Epoxyacrylat- oder Siliconacrylat-, vorzugsweise aus einem Polyesteracrylat-, insbesondere aus einem Urethanacrylat-Oligomeren oder den entsprechenden Methacrylat-Oligomeren als durch Strahlung polymerisierbaren Präpolymeren aufgebaut ist, welches gegebenenfalls mit Mono-, Tetra-, Penta- und/oder Hexaacrylat, vorzugsweise mit Di- oder Triacrylat, von Polyolen oder Ätherpolyolen, oder den entsprechenden Methacrylaten durch Strahlung polymerisiert ist.

3. Dekorative Platte nach Anspruch 2, dadurch gekennzeichnet, daß das Präpolymere ein aliphatisches Urethanacrylat-Oligomeres ist, welches mit einem Di- oder Triacrylat durch Strahlung polymerisiert ist.

4. Dekorative Platte nach einem der Ansprüche 1 bis 3, dadurch gekennzeichnet, daß die durch Strahlung polymerisierte äußerste Schicht der Platte dekorativ ist und sich gegebenenfalls zwischen der Kernschicht und der äußersten Schicht ein Papier befindet.

5. Dekorative Platte nach einem der Ansprüche 1 bis 3, dadurch gekennzeichnet, daß die durch Strahlung polymerisierte äußerste Schicht der Platte transparent ist und sich zwischen der Kenrschicht und dieser äußersten Schicht eine dekorative Schicht befindet, die aus einem Dekorpapier besteht oder die durch Strahlung polymerisierten Komponenten umfaßt.

## Claims

1. Decorative panel comprising a core layer, decorative layers applied to one or both surfaces thereof, and an outermost layer on at least one of the two panel surfaces, which is built up from a synthetic resin of one or more radiation-polmyerised components selected from the group consisting of unsaturated acrylates and methacrylates, characterized in that the outermost radiation-polymerised layer has been pressed under a pressure of at least 15 bar at a minimum temperature of 80 °C, this outermost layer being scratch-resistant under a scratch load of at least 2, preferably 2 to 7 Newtons (DIN 53 799, part 10), and this outermost radiation-polymerised layer optionally further containing customary additives.

2. Decorative panel according to Claim 1, characterized in that the synthetic resin is built up from an epoxy acrylate oligomer or silicone acrylate oligomer, preferably from a polyester acrylate oligomer, in particular from a urethane acrylate oligomer or the corresponding methacrylate oligomers, as radiation-polymerisable prepolymers, which may be radiation-polymerised with a mono-, tetra-, penta- and/or hexaacrylate, preferably with a di- or triacrylate, of polyols or ether polyols, or the corresponding methacrylates.

3. Decorative panel according to Claim 2, characterized in that the prepolymer is an aliphatic urethane acrylate oligomer which is radiation-polymerised with a di- or triacrylate.

4. Decorative panel according to one of Claims 1 to 3, characterized in that the radiation-polymerised outermost layer of the panel is decorative and a paper may be present between the core layer and the outermost layer.

5. Decorative panel according to one of Claims 1 to 3, characterized in that the radiation polymerised outermost layer of the panel is transparent and a decorative layer consisting of a decorative paper or comprising the radiation-polymerised components is present between the core layer and this outermost layer.

## Revendications

1. Panneau décoratif comprenant une couche interne, des couches décoratives sur une ou deux de ses faces, ainsi qu'une couche externe sur au moins une des deux surfaces du panneau, qui consiste en une résine synthétique formée d'un ou plusieurs composants polymérisé(s) par irradiation et choisis dans le groupe des acrylates et méthacrylates insaturés, caractérisé en ce que l'on comprime, sous une pression d'au moins 15 bar et à une température d'au moins 80°C, la couche externe polymérisée par irradiation, ce qui rend ladite couche externe résistante aux rayures lorsqu'elle est soumise à une contrainte d'au moins 2, de préférence 2 à 7 Newton (DIN 53799, Partie 10) et ladite couche externe polymérisée par irradiation contient en outre éventuellement les additifs usuels.

2. Panneau décoratif selon la revendication 1, caractérisé en ce que la résine synthétique se compose d'un oligomère à base d'un époxyacrylate ou d'un siliconeacrylate, de préférence un polyesteracrylate, en particulier un uréthanneacrylate, ou bien des oligomères de méthacrylates correspondants, en tant que prépolymère polymérisable par irradiation, lequel prépolymère est éventuellement polymérisé, par irradiation, avec un mono-, tétra-, penta- et/ou hexaacrylate, de préférence avec un di- ou triacrylate, de polyols ou d'éther-polyols, ou les méthacrylates correspondants.

3. Panneau décoratif selon la revendication 2, caractérisé en ce que le prépolymère est un oligomère uréthanneacrylate aliphatique, qui est polymérisé, par irradiation, avec un di- ou triacrylate.

4. Panneau décoratif selon une quelconque des revendications 1 à 3, caractérisé en ce que la couche externe, polymérisée par irradiation, du panneau est décorative et qu'un papier se trouve éventuellement placé entre la couche interne et la couche externe.

5. Panneau décoratif selon une quelconque des revendications 1 à 3, caractérisé en ce que la couche externe, polymérisée par irradiation, du panneau est transparente, et qu'une couche décorative se trouve placée entre la couche interne et cette couche externe, ladite couche décorative étant constituée d'un papier décoratif ou renfermant les composants polymérisés par irradiation.
